# EUROPEAN PATENT APPLICATION

(11) **EP 1 829 839 A1**
(43) Date of publication of application: **05.09.2007**
(21) Application number: 05811767.2
(22) Date of filing: 02.12.2005
(51) Int. Cl.: C04B 24/26, C08F 290/06, C04B 103/40

(54) **POWDERY POLYCARBOXYLIC-ACID CEMENT DISPERSANT AND DISPERSANT COMPOSITION CONTAINING THE DISPERSANT**

(30) Priority: 02.12.2004 JP 2004349819
(71) Applicant: Sika Ltd., Hiratsuka-shi, Kanagawa 254-0021 (JP); TOHO CHEMICAL INDUSTRY CO., LTD., Tokyo 104-0044 (JP)
(72) Inventor: TOMOYOSE, Tetsu, awa;2540021 (JP); KOBAYASHI, Atsushi, awa;2540021 (JP); IKEDA, Akira, awa;2540021 (JP); KURODA, Kenichi, awa;2540021 (JP); DANZINGER, Wernher M, , Sodegaura-shi, Chiba;2990 266 (JP); SAITOH, Kaname, , Sodegaura-shi, Chiba;2990266 (JP)
(74) Representative: Schaad, Balass, Menzl & Partner AG
(86) International application number: PCT/JP2005/022200
(87) International publication number: WO 2006/059723

(57) **Abstract**

There is provided a powdered polycarboxylic acid-based cement dispersant containing a polyamide-polyamine in a skeleton of a polymer thereof and a dispersant composition containing the dispersant, the dispersant having improved water reducing ability, slump-flow retention, and strength-developing properties of concrete, enabling effective prevention of blocking, being highly soluble in a slurry, and being homogeneously mixed with an inorganic powder. The powdered polycarboxylic acid-based cement dispersant comprises a powdered cement dispersant obtained by dry-powdering a solution or dispersion of a copolymer containing a polyamide-polyamine in a skeleton of a polymer thereof, wherein the powder has a sphere form, an average particle diameter of 30 to 300 µm, and a particle size distribution in which the mass of particles having a particle diameter of 50 to 350 µm accounts for 70% or more of the total mass of the powder.

## Description

### TECHNICAL FIELD

The present invention relates to a powdered polycarboxylic acid-based cement dispersant for inorganic substances, such as cement, mortar concrete and gypsum and to a dispersant composition containing the dispersant.

### BACKGROUND ART

Conventionally, cement dispersants have been circulated and handled in the form of liquid. However, with respect to a cement dispersant in the form of liquid, there have been such problems that when it is weighed or is added to a cement compound, it spills out or leaks to impair a work environment and that when it is blended to a cement compound, it is unlikely to be blended homogeneously. Thus, for solving such problems, there have been developed a method for powdering a cement dispersant itself, a method for adsorbing a liquid additive for cement to an appropriate inorganic or organic powder and a method for granulating a liquid additive for cement with an appropriate inorganic powder to powder the liquid additive for cement.

As powdered dispersants, for example, naphthalene-based or melamine-based powdered dispersants are known. However, recently, instead of the naphthalene-based or melamine-based powdered dispersants, there has been increasing use of polycarboxylic acid-based dispersants each having a polyalkylene glycol chain and an acid group. With an additive amount of a polycarboxylic acid-based dispersant less than that of a conventional dispersant, a fluidity of an inorganic slurry equal to that of a conventional dispersant can be secured. In addition, to the polycarboxylic acid-based dispersant, attention is paid as an effective agent for lowering the amount of a volatile organic substance in an interior material, which is caused when formaldehyde is contained in a skeleton of the chemical structure of the dispersant. Accordingly, the polycarboxylic acid-based dispersant is widely used in applications, such as a premix article for a hydraulic composition, a spraying material, an interior decoration, a concrete molded article for an outer wall, a floor material, a grout and a repairing material.
Besides such liquid polycarboxylic acid-based dispersants, powdered polycarboxylic acid-based dispersants are being developed. The powdered polycarboxylic acid-based dispersants are generally produced by a method involving heat-drying and grinding the dispersant (Patent Documents I and 2), a method for producing a powder by mixing a liquid polycarboxylic acid-based copolymer with an inorganic powder (Patent Document 3), or a method involving spray drying (Patent Documents 4 and 5). Further, there is also known a polycarboxylic acid-based dispersant having a polyamide-polyamine based monomer as one skeleton of a copolymer (Patent Documents 6 and 7).
Patent Document 1: Japanese Patent Application Publication No. JP-A-1 1-310444
Patent Document 2: Japanese Patent Application Publication No. JP-A-2000-327384
Patent Document 3: Japanese Patent Application Publication No. JP-A-10-45451
Patent Document 4: Japanese Patent No. 2669761
Patent Document 5: Japanese Patent No. 2563035
Patent Document 6: Japanese Patent No. 3235002
Patent Document 7: Japanese Patent No. 3336456

### DISCLOSURE OF THE INVENTION

### [Problems to be Solved by the Invention]

It is desired that when a cement dispersant is blended to a cement compound for preparing concrete, properties, such as water reducing ability, slump-flow retention, strength-developing properties of concrete, are effectively improved. In addition, when a cement dispersant is powdered, it is desired that the particle diameter and particle form have a high uniformity. If they are ununiform, when the cement dispersant is dry-blended with an inorganic powder, they are not homogeneously incorporated in each other. As a result, not only a disadvantage is caused wherein the powdered cement dispersant is present unevenly (segregation), but also a disadvantage is caused wherein when the powdered cement dispersant is added to a slurry containing water, cement, and the like, particles of the dispersant surface to around the surface of the slurry, so that the dispersant is unlikely to exert an inherent role as the dispersant. Since these disadvantages are large problems leading to a situation in which the performance of a concrete product is not satisfactorily improved finally, these disadvantages should be avoided by all means.
On the contrary, in the above patent documents 1 to 5, there is no description at least with respect to the uniformity of the diameter and form of the powdered cement dispersant particles described in these patent documents, so that these patent documents provide no sufficient indication for solving the above-noted problems.

### [Means for Solving the Problems]

In consideration of the above-mentioned disadvantages, the present inventors have selected a polycarboxylic acid-based cement dispersant containing a polyamide-polyamine in a skeleton of a copolymer thereof, in which water reducing ability, slump-flow retention, and strength-developing properties of concrete can be simultaneously improved and has attempted to powder it. Since it is necessary that the powder of the cement dispersant can be easily dissolved in a slurry, it is desired to enhance the solubility of the dispersant by minimizing the particle diameter of individual powder particles to enlarge the surface area of the whole powder. However, since a polyamide-polyamine monomer has high hydrophilicity, with respect to a powdered polycarboxylic acid-based cement dispersant using the monomer, when the powder is an aggregation of particles having a relatively small diameter, particles ofthe powder cohere to each other in a dryer during the production process thereof and blocking is likely to be caused. Therefore, for such a powdered cement dispersant, it is necessary to set the particle diameter of the dispersant powder larger; however, when the particle diameter is set so, on the contrary, the solubility of the dispersant powder in a slurry is lowered. Thus, the present inventor has made extensive and intensive studies with respect to the polycarboxylic acid-based cement dispersant containing a polyamide-polyamine in a skeleton of a polymer thereof. As a result, it has been found that by setting the average particle diameter and the particle size distribution in a specified range so as to cause the dispersant powder to be an aggregation of particles having a relatively large particle diameter, and also by making the form of powder particles even to a sphere form with which each particle has a minimum surface area, not only blocking can be effectively prevented and the dispersant powder becomes excellent in solubility in a slurry, but also a powdered polycarboxylic acid-based cement dispersant capable of being homogeneously mixed with an inorganic powder can be obtained. Based on this finding, the present invention has been completed.
That is, the present invention relates to a powdered polycarboxylic acid-based cement dispersant containing a powdered cement dispersant obtained by dry-powdering a solution or dispersion of a copolymer obtained by polymerizing, as main monomer components, at least one compound (Compound A) obtained by adding an alkylene oxide having 2 to 4 carbon atoms to a polyamide-polyamine in an amount of 0 to 8 mol relative to one equivalent of an amino residue of the polyamide-polyamine obtained by condensing 1.0 mol of a polyalkylene-polyamine, 0.5 to 0.95 mol of a dibasic acid or an ester between a dibasic acid and a lower alcohol having 1 to 4 carbon atoms, and 0.05 to 0.70 mol of an acrylic or methacrylic acid or an ester between an acrylic or methacrylic acid and a lower alcohol having 1 to 4 carbon atoms, at least one compound (Compound B) of formula (1): 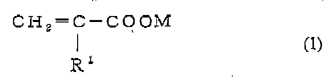 wherein R¹ represents hydrogen atom or methyl group, and M represents hydrogen atom, an alkali metal, an alkaline earth metal or a group containing nitrogen atom,
at least one compound (Compound C) of formula (2): 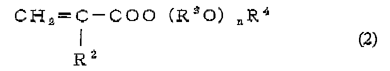 wherein R² represents hydrogen atom or methyl group; R³ represents an alkylene group having 2 to 4 carbon atoms; R⁴ represents hydrogen atom or an alkyl group having 1 to 4 carbon atoms; and n represents an average number of moles of added polyalkylene glycol of a positive number of 1 to 100,
wherein the powder has a sphere form, an average particle diameter of 30 to 300 µm and a particle size distribution in which the mass of particles having a particle diameter of 50 to 350 µm accounts for 70% or more, preferably 80% or more, more preferably 85% or more, most preferably 93% or more of the total mass of the powder. The present invention also relates to a powdered polycarboxylic acid-based cement dispersant composition in which besides the dispersant, a silica powder and an antifoamer are incorporated.
A powder in a sphere form as referred in the present invention contains powder particles in the form of a sheer sphere or in a form of a nearly sheer sphere. More specifically, the dispersant powder according to the present invention refers to that having a value of the ratio major axis/minor axis of the powder particles in a range of 1 to 1.2 in a microphotograph photographed by enlarging (usually photographed with a magnification of 500 folds to 10,000 folds) the particles, and particles having large anisotropy are excluded therefrom. The major axis of a particle refers to an axis having the longest size among sizes of the particle photographed by a microphotography, and the minor axis refers to an axis having the longest size among axes crossing orthogonally the major axis. As powder particles used in the present invention, more preferred is particles having a value of the ratio major axis/minor axis in a range of 1 to 1.1.
The present invention also relates to a production method of a powdered polycarboxylic acid-based cement dispersant composition and the method includes the following steps:
(1) obtaining a mixture by adding an inorganic powder to a solution or dispersion of a copolymer obtained by polymerizing, as main monomer components, at least one compound (Compound A) obtained by adding an alkylene oxide having 2 to 4 carbon atoms to a polyamide-polyamine in an amount of 0 to 8 mol relative to one equivalent of an amino residue of the polyamide-polyamine obtained by condensing 1.0 mol of a polyalkylene-polyamine, 0.5 to 0.95 mol of a dibasic acid or an ester between a dibasic acid and a lower alcohol having 1 to 4 carbon atoms, and 0.05 to 0.70 mol of an acrylic or methacrylic acid or an ester between an acrylic or methacrylic acid and a lower alcohol having 1 to 4 carbon atoms, at least one compound (Compound B) of formula (1): 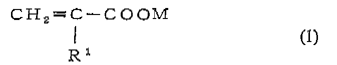 wherein R¹ represents hydrogen atom or methyl group, and M represents hydrogen atom, an alkali metal, an alkalinc earth metal or a group containing nitrogen atom,
   and at least one compound (Compound C) of formula (2): 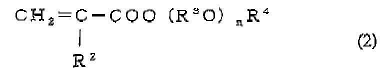 wherein R² represents hydrogen atom or methyl group; R³ represents an alkylene group having 2 to 4 carbon atoms; R⁴ represents hydrogen atom or an alkyl group having 1 to 4 carbon atoms; and n represents an average number of moles of added polyalkylene glycol of a positive number of 1 to 100;
(2) dry-powdering the mixture to obtain a powder having a sphere form, an average particle diameter of 30 to 300 µm and a particle size distribution in which the mass of particles having a particle diameter of 50 to 350 µm accounts for 70% or more, preferably 80% or more, more preferably 85% or more, most preferably 93% or more of the total mass of the powder; and
(3) adding a silica powder at the same time as or after the dry-powdering step.

### [Effects of the Invention]

The powdered cement dispersant of the present invention contains a polyamide-polyamine in a skeleton of a polymer thereof and the powder thereof has a sphere form, an average diameter of 30 to 300 µm and a particle size distribution in which the mass of particles having a particle diameter of 50 to 350 µm accounts to 70% or more of the total mass of the powder. Therefore, the dispersant and composition containing the same not only have such an advantage that water reducing ability, slump-flow retention, strength-developing properties of concrete can be improved and blocking can be effectively prevented, but also are excellent in solubility in a slurry and have such an advantage that they can be homogeneously mixed with an inorganic powder.

### BEST MODES FOR CARRYING OUT THE INVENTION

The powdered polycarboxylic acid-based cement dispersant of the present invention contains, as main monomer components, at least one compound (Compound A) obtained by adding an alkylene oxide having 2 to 4 carbon atoms to a polyamide-polyamine in an amount of 0 to 8 mol relative to one equivalent of an amino residue of the polyamide-polyamine obtained by condensing 1.0 mol of a polyalkylene-polyamine, 0.5 to 0.95 mol of a dibasic acid or an ester between a dibasic acid and a lower alcohol having 1 to 4 carbon atoms, and 0.05 to 0.70 mol of an acrylic or methacrylic acid or an ester between an acrylic or methacrylic acid and a lower alcohol having 1 to 4 carbon atoms, at least one compound (Compound B) of formula (1): 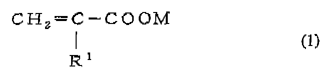 wherein R¹ represents hydrogen atom or methyl group, and M represents hydrogen atom, an alkali metal, an alkaline earth metal or a group containing nitrogen atom,
and at least one compound (Compound C) of formula (2); 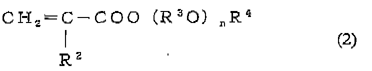 wherein R² represents hydrogen atom or methyl group; R³ represents an alkylene group having 2 to 4 carbon atoms; R⁴ represents hydrogen atom or an alkyl group having 1 to 4 carbon atoms; and n represents an average number of moles of added polyalkylene glycol of a positive number of 1 to 100, and contains as a constituent component, a polycarboxylic acid-based copolymer obtained by copolymerizing the above-noted monomers.

Compound A used in the present invention is as described above, a compound produced by adding a specific amount of an alkylene oxide (compound d) to a polyamide-polyamine produced by condensing a polyalkylene-polyamine (compound a), a dibasic acid or an ester (compound b) between a dibasic acid and a lower alcohol having 1 to 4 carbon atoms, and an acrylic or methacrylic acid or an ester (compound c) between an acrylic or methacrylic acid and a lower alcohol having I to 4 carbon atoms in a specific amount ratio.

Examples of the polyalkylene-polyamine as the compound a include diethylenetriamine, triethylenetetramine, tetraethylenepentamine, pentaethylenehexamine, dipropylenetriamine, tripropylenetetramine, and tetrapropylenepentamine. In terms of advantage and economy, preferred are diethylenetriamine and triethylenetetramine.

Examples of the dibasic acid and the ester thereof with a lower alcohol having 1 to 4 carbon atoms as the compound b include malonic acid, succinic acid, fumaric acid, maleic acid, glutaric acid, adipic acid, pimelic acid, phthalic acid, azelaic acid, and sebacic acid; and an ester of these acids with a lower alcohol having 1 to 4 carbon atoms, such as methanol, ethanol, propanol, butanol and isomers thereof, if present. Among them, in terms of advantage and economy, most preferred is adipic acid.

Examples of an acrylic or methacrylic acid and an ester thereof with a lower alcohol having I to 4 carbon atoms include acrylic acid, methacrylic acid, methyl acrylate, methyl methacrylate, ethyl acrylate, ethyl methacrylate, propyl acrylate, propyl methacrylate, butyl acrylate and butyl methacrylate.

The polyamide-polyamine containing 3 components of the above compounds a, b and c can be easily obtained by a known condensation polymerization technique. An alkylene oxide having 2 to 4 carbon atoms as the component d which is added to an amino residue of the polyamide-polyamine is ethylene oxide, propylene oxide or butylene oxide. These alkylene oxides may be used individually or in a combination of two or more.

Examples of the production method of the polyamide-polyamine, i.e. the condensation polymerization method of the compounds a, b and c include: a two-step reaction method in which first, the compound a and the compound b are subjected to condensation polymerization and then, the compound c which is a monobasic acid is added to the reaction mixture to subject these three compounds further to condensation polymerization; and a collective reaction method in which from the start of the reaction, the compounds a, b and c are mixed to subject these compounds simultaneously to condensation polymerization. However, even though any method is used, since this condensation polymerization reaction, i.e. amidation, progresses in parallel to a transamidation reaction, finally, an acrylic or methacrylic acid residue derived from the compound c will be positioned at a terminal of a polyamide chain, so that these two reaction methods offer the same result.

Next, the reaction molar ratio of the above three components constituting the polyamide-polyamine will be described. The reaction molar ratio of the compound b (a dibasic acid or an ester thereof) relative to 1.0 mol of the compound a (a polyalkylene-polyamine) is 0.5 to 0.95 mol. A condensation-polymeric product of the compounds a and b produced by a reaction in the above-noted range of the molar ratio is a polyamide having a chain length in a certain range and constituted by condensation polymerization of [(2 mol of polyalkylene-polyamine) : (1 mol of dibasic acid)] to [(20 mol of polyalkylene-polyamine) ; (19 mol ofdibasic acid)] on average. Consequently, a dispersant obtained using this polyamide exhibits high water reducing ability and high slump-flow retention. When the chain length of a polyamide is shorter than the above-noted certain range (when the above reaction ratio is less than 0.5 mol), in a dispersant obtained using the polyamide, slump retention is extremely lowered. When the chain length is longer than the above-noted certain range (when the above reaction ratio is more than 0.95 mol), water reducing ability is extremely lowered, which is not preferred.

The polyamide-polyamine according to the present invention has 0.10 mol (when a:b:c = 1.0:0.5:0.05 (mol)) to 14 mol (when a:b;c = 1.0;0.95:0.70 (mol)) of an acrylic or methacrylic acid residue per one molecule ; however, in terms of advantage, a preferred range is 0.5 to 2.0 mol. When this number of moles is less than 0.5 mol (for example, when a:b - 1.0:0.5 and the amount ratio of compound c to compound a is less than 0.25), the amount ratio of Compound A obtained from this number of moles and incorporated in a final copolymer is lowered and the performance as a cement dispersant is extremely lowered. On the other hand, when the number of moles is more than 2.0 mol (for example, when a:b = 1.0:0.95 and the amount ratio of compound c to compound a is more than 0.10), the degree of crosslinking becomes too high, so that the dispersion performance is lowered.

The amount of an alkylene oxide added to a polyamide-polyamine is 0 to 8 mol relative to one equivalent of the amino residue of the polyamide-polyamine. When this number of moles is more than 8, the molecular weight of Compound A becomes large and consequently, the cation equivalent is lowered, so that a sufficient advantage as an amphoteric polymer of the present invention cannot be obtained. In the present invention, the above-noted addition of an alkylene oxide is preferably performed and the amount of an added alkylene oxide is preferably 0.5 to 6.0, particularly preferably 1.0 to 5.5, relative to one equivalent of an amino residue of the polyamide-polyamine.

Examples of the Compound B used in the present invention include acrylic acid, methacrylic acid and alkali metal salts or alkaline earth metal salts thereof. As a raw material monomer during the copolymerization, acrylic acid and methacrylic acid are particularly preferred.

It is preferred in terms of the solubility in water that the form of Compound B after finally incorporated in the copolymer is a salt neutralized (partially or wholly) by an acid and/or sodium, potassium, calcium, magnesium, ammonium, monoethanol amine, diethanol amine or triethanol amine. The neutralization may be performed either after synthesized in the form of an acid or before the polymerization (already has been neutralized in the form of a salt at the polymerization).

Examples of Compound C used in the present invention include an (meth)acrylic acid ester of methoxypolyethylene glycol, an (meth)acrylic acid ester of an adduct of a lower alcohol with ethylene oxide/propylene oxide and a mono(meth)acrylic acid ester of polyalkylene glycol. When the oxyalkylene groups are used in combination of two or more, each of them may be of random addition or block addition.

Examples of a copolymerizable monomer besides Compounds A, B and C of the present invention include known monomers, for example aqueous monomers, such as 2-hydroxyethylmethylmethacrylate and sodium styrenesulfonate; non-aqueous monomers, such as methyl (meth)acrylate, ethyl (meth)acrylate, butyl (meth)acrylate and styrene; anionic monomers, such as itaconic acid, maleic acid (anhydride), vinylsulfonic acid and styrenesulfonic acid; amide-based monomers, such as acrylamide and an alkylene oxide adduct of acrylamide; polyalkylene glycol-based monomers, such as an alkylene oxide adduct of allyl alcohol and a mono- or diester between a polyalkylene glycol and maleic anhydride and an ester between a polyalkylene glycol and itaconic acid. These monomers may be incorporated in the copolymer in an amount of 10% or less by mass, based on the total used amount in mass of all monomers.

It is preferred in terms of advantage that the formulation ratios of Compounds A, B and C used in the present invention are 5% to 25% by mass : 1% to 20% by mass : 10% to 90% by mass (with proviso that the total ratio is 100% by mass). Compounds A, B and C may be used individually or in combination of two or more. The thus obtained copolymer(s) may be used individually or in mixture of a plurality thereof. In addition, after dry-powdering, another powdered dispersant than the cement dispersant of the present invention may be incorporated in the copolymer composition.

The production method for obtaining a polycarboxylic acid-based copolymer containing Compounds A, B and C is not particularly limited and examples thereof include known polymerization methods, such as a solution polymerization or bulk polymerization using a polymerization initiator.

The solution polymerization can be performed either batch-wise or continuously and examples of solvents used for the solution polymerization include water; alcohols, such as methanol, ethanol and isopropanol; aromatic or aliphatic hydrocarbons, such as benzene, toluene, xylene, cyclohexane and n-hexane; ester or ketone compounds, such as ethyl acetate, acetone and methyl ethyl ketone; cyclic ether compounds, such as tetrahydrofuran and dioxane; however in terms of the solubility of a raw material monomer and an obtained copolymer, at least one compound selected from the group consisting of water and lower alcohols having I to 4 carbon atoms is preferred and among them, water is more preferred.

When the aqueous solution polymerization is performed, as a radical polymerization initiator, used is a water-soluble polymerization initiator, for example persulfates, such as ammonium persulfate, sodium persulfate and potassium persulfate; hydrogen peroxide; azoamidine compounds, such as 2,2'-azobis-2-methylpropionamidine hydrochloric acid salt; cyclic azoamidine compounds, such as 2,2'-azobis-2-(2-imidazolin-2-yl) propane hydrochloric acid salt; and water-soluble azo-compounds, such as azonitrile compounds (e.g., 2-carbamoylazoisobutyronitrile), These polymerization initiators can be used in combination with an accelerator, such as alkali metal sulfites (e.g., sodium hydrogen sulfite), methadisulfite, sodium hypophosphite, Fe (II) salts such as Mohr's salt, sodium hydroxymethanesulfonic acid dihydrate, hydroxyl amine salts, thiourea, L-ascorbic acid (or salts thereof) and erythorbic acid (or salts thereof).

In the solution polymerization using as a solvent, lower alcohols, aromatic or aliphatic hydrocarbons, ester compounds or ketone compounds, as a radical polymerization initiator, used are peroxides, such as benzoyl peroxide, lauroyl peroxide and sodium peroxide; hydroperoxides, such as t-butyl hydroperoxide and cumene peroxide; azo-compounds, such as azobis-isobutyronitrile. In this case, an accelerator, such as amine compounds can be used in combination with the initiator. Further, when a water-lower alcohol mixed solvent is used, a radical polymerization initiator appropriately selected from the above various radical polymerization initiators or a combination of a radical polymerization initiator appropriately selected from the above various radical polymerization initiators, with an accelerator appropriately selected from the above various accelerators can be used.

In the case of performing a bulk polymerization, examples of the radical polymerization initiator include peroxides, such as benzoyl peroxide, lauroyl peroxide and sodium peroxide; hydroperoxides, such as t-butyl hydroperoxide and cumene hydroperoxide; and azo-compounds, such as azobis-isobutyronitrile.

The reaction temperature for the copolymerization is not particularly limited; however, for example when a persulfate is used as an initiator, the reaction temperature is appropriately in a range of 30 to 95°C.

For the copolymerization, a chain transfer agent can be used. Examples of the chain transfer agent include thiol-based chain transfer agents, such as mercaptoethanol, thioglycerol, thioglycolic acid, 2-mercaptopropionic acid, 3-mercaptopropionic acid, thiomalic acid, octyl thioglycolate, octyl 3-mercaptopropionate and 2-mercaptoethanesulfonic acid. These chain transfer agents can be used in combination of two or more.

The polymerization time for the copolymerization is not particularly limited; however, appropriate is a range of 0.5 to 10 hours, preferred is a range of 0.5 to 8 hours, more preferred is a range of 0.5 to 6 hours. When the polymerization time is shorter or longer than these ranges, it leads to the lowering of the rate of polymerization or of the productivity, which is not preferred.

The dropping method for the copolymerization is not particularly limited and examples thereof include a method for dropping an initiator into a reactor after a part or the whole of each monomer has charged into the reactor; a method for dropping other monomers (than one or more monomers) which has (have) been already charged), an initiator and a chain transfer agent into a reactor after one or more monomer(s) has (have) been charged into the reactor; a method for dropping individually a mixture of monomers, a radical polymerization initiator and a chain transfer agent into a reactor (disclosed in Patent Document 6 and 7); and a method for dropping individually a mixture of each monomer and a chain transfer agent, and a radical polymerization initiator. Further, a method for shifting the timing for charging each monomer in accordance with the reactivity of each monomer is generally performed.

The molecular weight of the polycarboxylic acid-based copolymer obtained according to the present invention is not particularly limited; however, as the mass average molecular mass (measured by a gel permeation chromatography and converted into of polyethylene glycol), it is preferably in a range of 3,000 to 500,000 and when it is out of this range, the water reducing ability and the slump retention are lost.

The powdered polycarboxylic acid-based cement dispersant of the present invention contains a powdered cement dispersant obtained by dry-powdering a solution or dispersion of a polycarboxylic acid-based copolymer and is necessary to have a sphere form and to have an average particle diameter of 30 to 300 µm and a particle size distribution in which the mass of particles having a particle diameter of 50 to 350 µm accounts for 70% or more of the total mass of the powder. In terms of the solubility and the kneading properties, an average particle diameter of particles is more preferably 40 to 280 µm most preferably 60 to 180 µm and a particle size distribution of particles is that in which the mass of particles having a particle diameter of 50 to 350 µm accounts for preferably 80% or more, more preferably 85% or more, most preferably 93% or more of the total mass of the powder. When the powder is not in a sphere form, the average particle diameter is out of the range of 30 to 300 µm, or the particle size distribution is not the particle size distribution in which the mass of particles having a particle diameter of 50 to 350 µm accounts for 70% or more ofthe total mass ofthe powder, the blocking and the lowering of the solubility in a slurry is likely to be caused.

The powdered polycarboxylic acid-based cement dispersant composition of the present invention can be produced specifically by the below-described production method. In step (1) of the production method, Compounds A, B and C, as main monomer components, are polymerized to obtain a solution or dispersion of a polycarboxylic acid-based copolymer and subsequently, to the solution or dispersion, an inorganic powder is added to obtain a mixture. By adding an inorganic powder, the solution or dispersion is neutralized, so that the dry-powdering can be more effectively performed. Examples of the inorganic powder include lithium carbonate, potassium sulfate, sodium sulfate, aluminum sulfate, a bilder, zeolite, calcium hydroxide, magnesium hydroxide, aluminum hydroxide, a silica powder (containing a silica fine powder and a porous silica fine powder) and any combination thereof. Among them, calcium hydroxide and magnesium hydroxide are more preferred in terms of a large electric charge.

The mixture of a solution or dispersion of a polycarboxylic acid-based copolymer and an inorganic powder obtained in the step (1) is dry-powdered in the following step (2), for example by a spray dryer to a powder having a predetermined form (i.e., a sphere form), size (i.e., an average diameter of 30 to 300 µm) and particle size distribution (i.e., a particle size distribution in which the mass of particles having a particle diameter of 50 to 350 µm accounts for 70% or more of the total mass of the powder). Examples of the method in which a solution or dispersion of a poly,carboxylic acid-based copolymer is dried to be powdered include besides a method using a spray dryer, methods using a reduced-pressure dryer, a vacuum dryer, a drum dryer, a tray dryer, a kneader dryer or the like. Particularly for obtaining an objective powder particle diameter and form, a drying method using a spray dryer is particularly preferred.

To the powder obtained in the step (2), a silica powder is added in the step (3) for enhancing more the fluidity thereof to obtain the powdered polycarboxylic acid-based cement dispersant composition of the present invention. Such an adding of a silica powder may be performed either after or upon the step (2). For example, while spraying a mixture of a polycarboxylic acid-based copolymer and an inorganic powder using a spray dryer and the like to dry-powder the mixture, a silica powder may be added to the spray dryer to spray the silica powder simultaneously with the mixture, or to the mixture after dry-powdered, a silica powder may be added to the mixture to merely mix the resultant mixture. Since the silica powder used in the step (3) is mixed with the dry-powdered powder, for preventing the segregation in that mixing, the silica powder is desired to have the same diameter as that of the dry-powdered powder. As a silica powder used advantageously, there can be mentioned a silica fine powder, particularly a porous silica fine powder. The silica powder used in the step (3) may be the same as the silica powder used in the step (1).

To the polycarboxylic acid-based cement dispersant, an antifoamer can be added for preventing foaming in a cement dispersion slurry and the like. The antifoamer can be either added to a solution or dispersion of a polycarboxylic acid-based copolymer before dry-powdered or dry-blended to a dry-powdered polycarboxylic acid-based copolymer as a powdered antifoamer mixed with a silica powder. The antifoamer is not particularly limited and an antifoamer containing, as a main component, a polyether-based antifoamer is preferred. Examples of such a polyether-based antifoamer include an aliphatic acid alkylene oxide adduct, a higher alcohol alkylene oxide adduct, an aliphatic acid esterification product of an aliphatic acid alkylene oxide adduct, an aliphatic acid esterification product of a higher alcohol alkylene oxide adduct, a polyalkylene glycol aliphatic acid ester, polypropylene glycol, glycerine propylene glycol and an alkylene oxide adduct of an aliphatic amine. The antifoamer may be a compound containing, as a main component, these compounds.

The powdered polycarboxylic acid-based cement dispersant and powdered polycarboxylic acid-based cement dispersant composition according to the present invention can be used for an inorganic powder, for example various Portland cements, such as ordinary Portland cement, highearly strength Portland cement, moderate heat Portland cement, and belite-rich Portland cement; various mixed cements, such as a blast furnace cement, a flyash cement and a silica fume cement; and various gypsums, such as an alumina cement, an α-gypsum, a gypsum dihydrate and a gypsum hemihydrate. These cement dispersant or cement dispersant composition is incorporated in a hydraulic composition in an amount of 0.001% to 10% by mass, based on the mass of the hydraulic composition and can be used in combination with an additive, such as a general-purpose curing accelerator, curing retardant, thickening agent, water proofing agent, antiseptic agent and rust preventing agent.

In addition, for enhancing the solubility during the dry-powdering, a penetrating agent, such as acetylene glycol, dioctylsuccinic acid ester sulfonate and a polyalkylene glycol having a low molecular mass, can be incorporated in the composition and a lump preventing agent, such as glyoxal can be also incorporated in the composition.

The formulation ratios of a polycarboxylic acid-based cement dispersant, a silica powder and an antifoamer are preferably 85.0% to 99.8% by mass : 0.1% to 10.0% by mass: 0.1% to 5.0% by mass (in a solid amount and relative to 100% by mass of the composition). By obtaining formulation ratios in the above-noted range, a composition having advantageous powder properties can be obtained.

Hereinafter, the present invention will be more specifically described referring to the following Examples which should not be construed as limiting the scope of the present invention.

### Examples

### [Synthesis Example 1] Production of polycarboxylic acid-based copolymer

Into a reactor (capacity of 5L) equipped with a stirrer, nitrogen introducing tube, condenser and thermometer, 1,400 g of water were charged and nitrogen was introduced to purge the inside of the synthesis system to nitrogen atmosphere. Thereafter, the temperature inside of the reactor was elevated to 80°C. Into a first dropping funnel equipped with a stirrer, were charged 380 g of water and a mixture of 496 g of a polyamide-polyamine as Compound A (Compound A-1 (solid content of 40%) prepared according to a production method described in Patent Document 7, of which charged mass ratio is 15%, based on the total mass of all monomers), 290 g of methacrylic acid as Compound B (Compound B-1, of which mass ratio is 20%) and I,244 g of methoxy PEG (polyethylene glycol) (molecular mass of 1,000) methacrylate as Compound C (Compound C-1, of which mass ratio is 65%). Into a second dropping funnel, 440 g of 10% thioglycolic acid aqueous solution were charged. And into a third dropping funnel, 489 g of 10% sodium persulfate aqueous solution were charged. The contents in the first, second and third dropping funnels were respectively dropped into the reactor so that all of the droppings respectively from these funnels are simultaneously completed after 3 hours from the start of the droppings. After the completion of all of the droppings, through the third dropping funnel, further 81 g of 10% sodium persulfate aqueous solution were dropped into the reactor over 30 minutes. After the completion of the dropping and reaction, while maintaining the reaction temperature at 80°C for 2 hours, the aging was performed. After the completion of the aging, the temperature of the reactor was lowered by cooling to 50°C and then, the content of the reactor was neutralized with calcium hydroxide to pH 8, Thus, an aqueous solution of 4,900 g of polycarboxylic acid-based copolymer (X) (Copolymer 1) was obtained. [Synthesis Examples 2 to 6] Production of polycarboxylic acid-based copolymer

In substantially the same manner as in Synthesis Example 1, except that the type and the amount in mass of each monomer of Compound A, B or C, and alkali species were changed to those described in each corresponding column of Table 1, aqueous solutions of polycarboxylic acid-based copolymers 2 to 6 were prepared.

**Table 1 Production Examples of Polycarboxylic Acid-Based Copolymer**

| Polycarboxylic acid-based copolymer (X) | Compound A | | Compound B | | Compound C | | Alkali species |
|---|---|---|---|---|---|---|---|
| | Type | Mass | Type | Mass | Type | Mass | |
| Copolymer 1 | A-1 | 15 | B-1 | 20 | C-1 | 65 | Ca(OH)₂ |
| Copolymer 2 | A-1 | 5 | B-1 | 10 | C-1 C-2 | 20 65 | Ca(OH)₂ |
| Copolymer 3 | A-2 | 15 | B-1 | 10 | C-1 C-4 | 20 55 | Ca(OH)₂ |
| Copolymer4 | A-2 | 10 | B-2 | 10 | C-2 C-3 | 50 30 | Mg(OH)₂ |
| Copolymer 5 | Copolymer 1 : Copolymer 2 = 50% : 50% | | | | | | |
| Copolymer 6 | None | - | B-1 | 10 | C-1 C-2 | 21 69 | Ca(OH)₂ |

In Table I, the unit of mass is percentage by mass and mass means a mass ratio of each Compound, based on the total mass of active components in Compounds A to C, with proviso that the total mass is 100% by mass.
<Compound A>
Compound A-1: the compound A-1 described in Patent Document 7 was produced and used as Compound A-1 of the present invention.
Compound A-2: the compound A-3 described in Patent Document 7 was produced and used as Compound A-2 of the present invention.
<Compound B>
Compound E-1: methacrylic acid
Compound B-2: acrylic acid
<Compound C>
Compound C-1: methoxyPEG 1,000 (molecular mass of 1,000) methacrylate
Compound C-2: methoxyPEG 2,000 (molecular mass of 2,000) methacrylate
Compound C-3: methoxyPEG 1,000 (molecular mass of 1,000) acrylate
Compound C-4: methoxyPEG 4,000 (molecular mass of 4,000) methacrylate

### [Example 1] Production of powdered polycarboxylic acid-based cement dispersant composition

4,000 g of Copolymer 1 obtained in Synthesis Example 1 and 4 g of an antifoamer were charged into a mixing container equipped with a stirrer and were mixed. The mixing was performed by continuing the stirring until the completion of the powdering. This liquid mixture was continuously sprayed, dried and powdered using a spray dryer (manufactured by Niro Japan Co., Ltd.). The spray-drying was performed according to an atomizer system (disc system) and the apparatus-operating conditions, such as 10,000 rpm of disc rotating number, 200°C of blast temperature, 120°C of exhaust temperature and approximately 4 kg/hour of liquid feeding amount were maintained. In addition, a porous silica fine powder was fed upon the dry-powdering from a lower part of the spray dryer using a known quantitative feeding apparatus.
Thus, in Example 1, 1,580 g of the composition as the powdered polycarboxylic acid-based cement dispersant composition of the present invention (Polycarboxylic acid-based copolymer(X) : Silica fine powder(Y) : Antifoamer(Z) = 98.8% : 1.0% : 0.2%) were obtained. The obtained composition of Example 1 was a light yellow powder and had an average particle diameter of 110 µm, an angle of repose of 34°, a water content of 1.8% and a bulk density (g/cm³) of 0.5. [Examples 2 to 5 and Comparative Examples 1 and 2] Production of powdered polycarboxylic acid-based cement dispersant composition

In substantially the same manner as in Example 1, except that a polycarboxylic acid-based copolymer (X), an antifoamer (Z), a drying method, a silica fine powder (Y) and a mixing method thereof shown in Table 2 were selected, powdered polycarboxylic acid-based cement dispersant compositions in Examples 2 to 5 and Comparative Examples 1 and 2 were obtained.

**Table 2 Production Examples of Powdered Polycarboxylic Acid-Based Cement Dispersant Composition**

| Powdered cement dispersant composition | Polycarboxylic acid-based copolymer (X) | Antifoamer (Z) | | Drying method | Silica fine powder (Y) | | Mixing method of silica fine powder (Y) |
|---|---|---|---|---|---|---|---|
| | | Type | mass ratio | | Type | Mass ratio | |
| Example 1 | Copolymer 1 | Z1 | 0.2% | [p] | Y1 | 3.0% | [v] |
| Example 2 | Copolymer 2 | Z1 | 0.2% | [p] | Y1 | 4.0% | [v] |
| Example 3 | Copolymer 3 | Z3 | 0.5% | [p] | Y1 | 2.0% | [v] |
| Example 4 | Copolymer 4 | Z2 | 0.1% | [p] | Y2 | 5.0% | [w] |
| Example 5 | Copolymer 5 | Z1 | 0.3% | [p] | Y1 | 3.0% | [v] |
| Comparative Example 1 | Copolymer 6 | Z1 | 0.5% | [p] | - | - | - |
| Comparative Example 2 | Copolymer 1 | Z2 | 0.5% | [q] | - | - | - |

### <Antifoamer (Z)>

The additive amount of the antifoamer means a mass ratio of an each liquid antifoamer to the total mass of an each copolymer aqueous solution and an each liquid antifoamer.
Antifoamer Z1: Polyether-based antifoamer
Antifoamer Z2: Polypropylene glycol Antifoamer Z3: Higher alcohol alkyleneoxide adduct

### <Silica fine powder (Y)>

The mass ratio of the silica fine powder means a mass ratio of a silica fine powder to the mass of a powdered copolymer obtained as a dry powder. Silica fine powder Y1: Porous silica fine powder (Carplex #80-D; manufactured by Shionogi & Co., Ltd.) Silica fine powder Y2: Powdered antifoamer containing a silica fine powder and an antifoamer

### <Drying method [p]>

Using a spray dryer (manufactured by Niro Japan Co., Ltd.; dryer by spraying) of an atomizer type (disc type, rotating number of 10,000 rpm), while maintaining the blast temperature at 200°C and the exhaust temperature at 120°C, a mixture of a polycarboxylic acid-based copolymer (X) and an antifoamer (Z) was successively sprayed to perform the drying until the water content of the dried product becomes 5% by mass or less.

### <Drying method [q]>

Into a vacuum-kneading type drying apparatus (manufactured by Inoue manufacturing Co., Ltd.; double-armed kneader) having a steam heating jacket, a polycarboxylic acid-based copolymer (X) and an antifoamer (Z) were charged and mixed by stirring at a rotating number of 60 rpm for about 1 minute. Next, the jacket temperature of the drying apparatus was elevated to 100°C and the pressure inside of the apparatus was reduced to 30 Torr. While kneading the content in the apparatus at a rotating number of stirring of 60 rpm, the drying was performed. At the time when the water content of the dried product became 5% by mass or less, the drying was terminated. The dried product was allowed naturally to stand to cool until about 20°C. Next, all amount of the dried product after allowed to stand to cool was ground at room temperature (about 20 ± 1 °C) using a pin mill (manufactured by Hosokawa Micron Corporation) rotating at a high speed under a condition where the number of rotating was 18,000 rpm and the number of pins was 400.

### <Mixing method [v] of silica fine powder (Y)>

A dried powder containing a polycarboxylic acid-based copolymer (X) and an antifoamer (Z) and a silica fine powder (Y) were charged into a drum-type mixer and mixed for 30 minutes.

### <Mixing method [w] of silica fine powder (Y)>

From the bottom part of a spray dryer, a silica fine powder (Y) was inserted with force using a quantitative feeding apparatus (manufactured by Hosokawa Micron Corporation) so that a silica fine powder (Y) is blended in a certain ratio to a dried fine powder containing a polycarboxylic acid-based copolymer (X) and an antifoamer (Z). When using a vacuum-kneading type drying apparatus, from the time when the water content became 10% or less, a silica fine powder (Y) was charged continuously into a drying apparatus main body.

With respect to a powdered cement dispersant included in each composition of Examples 1 to 5 and Comparative Examples 1 and 2, a particle form, a ratio of particles having a particle diameter of 50 to 350 µm, an average particle diameter, an angle of repose, a hygroscopicity, anti-blocking properties and water solubility were evaluated and the results thereof were listed up in the following Table 3.

**Table 3 Properties of Powdered Cement Dispersants**

| | | Example 1 | Example 2 | Example 3 | Example 4 | Example 5 | Compara. Example 1 | Compara. Example 2 |
|---|---|---|---|---|---|---|---|---|
| Particle form | | Sphere | Sphere | Sphere | Sphere | Sphere | Sphere | Angular |
| Ratio (% by mass) of particles having a diameter of 50 to 350 µm | | 98 | 96 | 96 | 97 | 95 | 82 | 86 |
| Average particle diameter (µm) | | 150 | 110 | 170 | 220 | 130 | 300 | 530 |
| Angle of repose (°) | | 31 | 30 | 32 | 31 | 30 | 42 | 48 |
| Hygro- | 1 day | 3 | 2 | 4 | 4 | 3 | 5 | 4 |
| scopicity | 7 days | 11 | 13 | 12 | 14 | 12 | 15 | 14 |
| Anti-blocking properties | | A | A | A | A | A | B | B |
| Water solubility | | 54 sec | 43 sec | 46 sec | 58 sec | 44 sec | 2 min 12 sec | 1 min 52 sec |

| | | | | | | | | |
|---|---|---|---|---|---|---|---|---|
| • Particle form: using an optical microscope (magnification: 1,000 folds), confirmed visually. • Ratio (in percentage by mass) of particles having a diameter of 50 to 350 µm: Using a sieving tester, a predetermined amount of a powder was sieved into particles having a diameter within a range of 50 to 350 µm and particles having a diameter out of the above range, and the ratio of the amount of particles having a diameter within a range of 50 to 350 µm to the above predetermined amount was measured and expressed in percentage by mass. Average particle diameter: calculated from measuring results ofthe particle size distribution. • Angle of repose (°): measured according to JIS R 9301-2-2. • Hygroscopicity (%): measured under the condition where the temperature was 20°C and the humidity was 40%, and expressed in a mass increasing rate (%) relative to the mass before the measurement. The measurement was performed after 1 day and 7 days. • Anti-blocking properties: Under the condition where the temperature was 20°C and the humidity was 40%, a load of 5 kg was applied to the dispersant composition of the present invention for 7 days, and a fused degree of the dispersant mixture was evaluated visually. Evaluation scale: A; not fused, E; fused. • Water solubility: Into a 100 mL beaker, 100 mL of pure water having a temperature of 20 to 25°C and a 3 cm magnetic stirrer rod were charged and while stirring the water at 500 rpm, 0.5 g of a powder was charged still into the beaker. As the evaluation, the time until the powder was completely dissolved was measured visually. | | | | | | | | |

Any one of the dispersants included in the thus obtained powdered cement dispersant compositions in Examples 1 to 5 has not only a polyamide-polyamine in a skeleton of a copolymer and has a sphere form, but also has an average particle diameter of 30 to 300 µm and has a particle size distribution in which particles having a diameter of 50 to 350 µm accounts for 70% by mass or more, based on the total mass of the powdered cement dispersant composition. As a result, these powdered polycarboxylic acid-based dispersants exhibited advantageous water solubility. Such a result shows that the powdered polycarboxylic acid-based dispersant has advantageous dispersibility in a slurry. On the other hand, in Comparative Example 1, since a monomer having a polyamide-polyamine chain is not a part of a recurring structure of a polymer, and in Comparative Example 2, since a particle diameter is large, a powdered polycarboxylic acid-based dispersant has poor water solubility.
The powders in Examples 1 to 5 had more advantageous fluidity (had lower angle of repose) than that of the powders in Comparative Examples 1 and 2, and resulted in being excellent in anti-blocking properties and water solubility.

### Mortar Flow Test

200 g of an ordinary Portland cement (manufactured by Taiheiyo Cement Corporation), 260 g of silica sand #6 (manufactured by Nippon Plaster Co., Ltd.) and 0.448 g of each of the powdered cement dispersant compositions in Examples 1 to 5 and Comparative Example 1 and 2 which is weighed and taken in the form of a powder, were dry-mixed for 90 seconds (ratio of sand/cement = 130%). 80 g of water for kneading were weighed and taken and thereinto, a mixture of cement, sand (inorganic powders) and a powdered cement dispersant composition were charged.
The resultant mixture was mixed for 180 seconds to prepare a mortar paste (ratio of water/cement = 40%). For maintaining the conditions of the dry-mixing and the mortar mixing to be constantly homogeneous, a scrupulous attention was paid. Mortar Flow Measurement and Result thereof

A prepared mortar was poured into a hollow cylindrical container (size :φ 50 mm x H 50 mm) standing on an acrylic resin plate to fill fully the container with the mortar. Immediately after the container was fully filled, the hollow cylindrical container was raised in the perpendicular direction relative to the acrylic resin plate with a constant speed. It was waited for the complete stop of the spreading of the mortar, and a maximum diameter of the spreading of the mortar and a diameter perpendicular to the maximum diameter were measured to calculate an average value respectively of the two measured diameters. This operation was performed also after 60 minutes and after 120 minutes from the preparation of the mortar paste. With respect to the measurements after 60 minutes and after 120 minutes, for preventing the evaporation of water, a container containing the mortar paste was covered with a vinyl sheet and allowed to stand still, and before the measurement, the mortar was mixed once again for 90 sec and poured into the hollow container. The results of the mortar flow test and the evaluation for the mixing properties of the mortar with an inorganic powder are listed up in Table 4.

**Table 4 Result of Mortar Flow Test and Mixing Properties with Inorganic Powder**

| | Mortar Flow Value (mm) | | | Mixing Properties with Inorganic Powder |
|---|---|---|---|---|
| | Immediately after | After 60 min | After 120 min | |
| Example 1 | 142 | 135 | 126 | A |
| Example 2 | 146 | 143 | 137 | A |
| Example 3 | 150 | 145 | 140 | A |
| Example 4 | 140 | 148 | 147 | A |
| Example 5 | 145 | 143 | 135 | A |
| Comparative Example 1 | 128 | 140 | 134 | B |
| Comparative Example 2 | 114 | 132 | 127 | B |

| | | | | |
|---|---|---|---|---|
| • Mixing properties with an inorganic powder: In 200 mL glass bottle, about 150 g of an inorganic powder and about 17 g of a powdered cement dispersant composition were weighed and taken (inorganic powder: powdered cement dispersant composition = 9:1) and mixed slowly for 1 min. From the state of the segregation (the presence of an agglomerate) of the powdered cement dispersant composition after the mixing, the mixing properties with an inorganic powder was evaluated comprehensively. Evaluation scale: A; advantageous mixing properties, B; segregation (agglomerate) was caused. | | | | |

In the mortar flow test, any one of the dispersants included in the powdered cement dispersant compositions in Examples 1 to 5 which has not only a polyamide-polyamine in a skeleton of a copolymer and has a sphere form, but also has an average particle diameter of 30 to 300 µm and has a particle size distribution in which particles having a diameter of 50 to 350 µm accounts for 70% by mass or more, based on the total mass of the powdered cement dispersant composition, exhibited excellent initial water reducing ability and excellent flow value with time. On the other hand, a dispersant of Comparative Example 1 having no polyamide-polyamine in a skeleton of a copolymer and a dispersant of Comparative Example 2 of which average particle diameter is out ofthe range of the present invention exhibited poorer mortar flow performance than that of any one dispersant of Examples.

## Claims

1. A powdered polycarboxylic acid-based cement dispersant comprising:
a powdered cement dispersant obtained by dry-powdering a solution or dispersion of a copolymer obtained by polymerizing, as main monomer components, at least one compound (Compound A) obtained by adding an alkylene oxide having 2 to 4 carbon atoms to a polyamide-polyamine in an amount of 0 to 8 mol relative to one equivalent of an amino residue of the polyamide-polyamine obtained by condensing 1.0 mol of a polyalkylene-polymine, 0,5 to 0.95 mol of a dibasic acid or an ester between a dibasic acid and a lower alcohol having 1 to 4 carbon atoms, and 0.05 to 0.70 mol of an acrylic or methacrylic acid or an ester between an acrylic or methacrylic acid and a lower alcohol having 1 to 4 carbon atoms, at least one compound (Compound B) of formula (1): 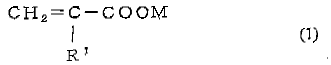
wherein R¹ represents hydrogen atom or methyl group, and M represents hydrogen atom, an alkali metal, an alkaline earth metal or a group containing nitrogen atom,
at least one compound (Compound C) of formula (2): 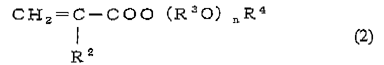 wherein R² represents hydrogen atom or methyl group; R³ represents an alkylene group having 2 to 4 carbon atoms; R⁴ represents hydrogen atom or an alkyl group having 1 to 4 carbon atoms; and n represents an average number of moles of added polyalkylene glycol of a positive number of 1 to 100,
wherein the powder has a sphere form, an average particle diameter of 30 to 300 µm, and a particle size distribution in which the mass of particles having a particle diameter of 50 to 350 µm accounts for 70% or more of the total mass of the powder.

2. A powdered polycarboxylic acid-based cement dispersant composition comprising:
the powdered polycarboxylic acid-based cement dispersant according to claim 1;
a silica powder; and
an antifoamer.

3. A production method of a powdered polycarboxylic acid-based cement dispersant composition, comprising the steps of
(1) obtaining a mixture by adding an inorganic powder to a solution or dispersion of a copolymer obtained by polymerizing, as main monomer components, at least one compound (Compound A) obtained by adding an alkylene oxide having 2 to 4 carbon atoms to a polyamide-polyamine in an amount of 0 to 8 mol relative to one equivalent of an amino residue of the polyamide-polyamine obtained by condensing 1.0 mol of a polyalkylene-polyamine, 0.5 to 0,95 mol of a dibasic acid or an ester between a dibasic acid and a lower alcohol having 1 to 4 carbon atoms, and 0.05 to 0.70 mol of an acrylic or methacrylic acid or an ester between an acrylic or methacrylic acid and a lower alcohol having 1 to 4 carbon atoms, at least one compound (Compound B) of formula (1): 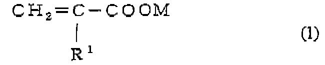 wherein R¹ represents hydrogen atom or methyl group, and M represents hydrogen atom, an alkali metal, an alkaline earth metal or a group containing nitrogen atom,
and at least one compound (Compound C) of formula (2): 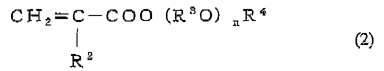 wherein R² represents hydrogen atom or methyl group; R³ represents an alkylene group having 2 to 4 carbon atoms; R⁴ represents hydrogen atom or an alkyl group having 1 to 4 carbon atoms; and n represents an average number of moles of added polyalkylene glycol of a positive number of 1 to 100;
(2) dry-powdering the mixture to obtain a powder having a sphere form, an average particle diameter of 30 to 300 µm and a particle size distribution in which the mass of particles having a particle diameter of 50 to 350 µm accounts for 70% or more of the total mass of the powder; and
(3) adding a silica powder at the same time as or after the dry-powdering step.
